# EUROPÄISCHE PATENTSCHRIFT

(11) **EP 2 217 469 B1**
(45) Veröffentlichungstag und Bekanntmachung des Hinweises auf die Patenterteilung: **30.03.2011**
(21) Anmeldenummer: 08857089.0
(22) Anmeldetag: 17.10.2008
(51) Int. Cl.: B60Q 1/04, F16B 5/02

(54) **VERSTELLELEMENT**
ADJUSTMENT ELEMENT
ÉLÉMENT DE POSITIONNEMENT

(30) Priorität: 05.12.2007 DE 202007016945 U
(43) Veröffentlichungstag der Anmeldung: 18.08.2010
(73) Patentinhaber: Böllhoff Verbindungstechnik GmbH, 33649 Bielefeld (DE)
(72) Erfinder: STEFFENFAUSEWEH, Sandra, 33415 Verl (DE); VORDERWISCH, Alexander, 33613 Bielefeld (DE); WELZEL, Gerald, 33607 Bielefeld (DE)
(74) Vertreter: Heyer, Volker
(86) Internationale Anmeldenummer: PCT/EP2008/008811
(87) Internationale Veröffentlichungsnummer: WO 2009/071151

(56) Entgegenhaltungen:
- EP-A- 0 679 553
- EP-A- 1 217 222
- EP-A- 1 464 539
- DE-A1-102007 002 699

## Beschreibung

### 1. Gebiet der Erfindung

Die vorliegende Erfindung betrifft ein Verstellelement, mit dem eine Komponente befestigbar und im Raum positionierbar ist, d.h. seine Position in x-, y- und z-Richtung wählbar und fixierbar ist.

### 2. Hintergrund der Erfindung

Im Stand der Technik werden derartige Verstellelemente beispielsweise zur Befestigung von Scheinwerfern im Kraftfahrzeugbau eingesetzt. Beim Einbau der Scheinwerfer ist sowohl eine Befestigung wie auch eine gezielte Positionierung des Scheinwerfers erforderlich. Um dies zu realisieren, bestehen bekannte Verstellelemente aus einer Hohlschraube, einer Befestigungsschraube mit Scheibe und einer Blindnietmutter, die in einem Karosserieblech befestigt ist.

Die Hohlschraube des Verstellelements wird in eine Befestigungsöse des Scheinwerfers entsprechend der gewünschten Positionierung in z-Richtung eingeschraubt. Da sich die Hohlschraube auf dem Karosserieblech abstützt, definiert sie den Abstand zwischen Befestigungsöse und Karosserieblech, also die z-Position des Scheinwerfers. Die Befestigungsschraube durchgreift die Hohlschraube und wird in die Blindnietmutter eingeschraubt. Der Durchmesser der Befestigungsschraube ist kleiner als die Durchgangsöffnung der Hohlschraube. Daraus folgt, dass die Hohlschraube und somit der Scheinwerfer in der xy-Ebene positionierbar ist, da die Hohlschraube trotz Befestigungsschraube lateral verschiebbar bleibt. Sobald die xy-Position eingestellt ist, wird die Befestigungsschraube festgezogen. Dazu drückt beim Festziehen eine Unterlegscheibe auf die Oberseite der Hohlschraube, so das die Hohlschraube zwischen Karosserieblech und Unterlegscheibe gehalten wird. Um eine verlässliche Konterung der Hohlschraube mit Hilfe der Unterlegscheibe zu erzielen, deckt die Unterlegscheibe die Oberseite der Hohlschraube vollständig ab. Daher ist einerseits die Hohlschraube für eine weitere Justage nicht mehr zugänglich und zudem wird die Bewegung der Hohlschraube durch das Fixieren der Befestigungsschraube verhindert.

Es ist daher von Nachteil, dass bei dieser Konstruktion zum Nachstellen der Z-Position bzw. der Hohlschraube immer die Befestigungsschraube gelöst werden muss. Bei diesem Lösen der Befestigungsschraube geht gleichzeitig die fixierte xy-Position verloren. Nachdem die z-Position neu eingestellt worden ist, muss ebenfalls eine Neueinstellung der xy-Position erfolgen. Mit diesem hohen Installations- und Wartungsaufwand sind gleichzeitig hohe Kosten verbunden.

Aus EP 0 679 553 A ist ein gattungsmäßiges Verstellelement, mit dem eine Komponente befestigbar und im Raum positionierbar ist, bekannt, das die folgenden Merkmale aufweist:
a.) eine Hohlschraube mit einem Außengewinde, mit dem eine Halterung der Komponente in axialer Richtung der Hohlschraube positionierbar ist,
b.) ein Innenelement, das innerhalb der Hohlschraube angeordnet und an dem die Hohlschraube drehbar befestigt ist, und
c.) eine Scheibe, die in axialer Richtung des Innenelements zwischen Hohlschraube und Innenelement lateral verschiebbar gehalten wird, so dass das Verstellelement lateral positionierbar und mit einem die Scheibe durchgreifenden Befestigungsmittel fixierbar ist.

Es ist daher die Aufgabe der vorliegenden Erfindung, ein Verstellelement bereitzustellen, mit dem im Vergleich zum Stand der Technik eine Komponente mit geringerem Aufwand befestigbar und im Raum positionierbar ist.

### 3. Zusammenfassung der Erfindung

Die oben genannte Aufgabe wird durch ein Verstellelement gemäß dem unabhängigen Anspruch 1 gelöst. Vorteilhafte Ausgestaltungen und Weiterentwicklungen vorliegender Erfindung gehen aus der folgenden Beschreibung, den Zeichnungen und den anhängenden Ansprüchen hervor.

Das erfindungsgemäße Verstellelement, mit dem eine Komponente befestigbar und im Raum positionierbar ist, weist die folgenden Merkmale auf eine Hohlschraube mit einem Außengewinde, mit dem eine Halterung der Komponente in axialer Richtung der Hohlschraube positionierbar ist, ein Innenelement, das innerhalb der Hohlschraube angeordnet und an dem die Hohlschraube drehbar befestigt ist, und eine Scheibe, die in axialer Richtung des Innenelements zwischen Hohlschraube und Innenelement lateral verschiebbar gehalten wird, so dass das Verstellelement lateral positionierbar und mit einem die Scheibe durchgreifenden Befestigungsmittel fixierbar ist.

Mit Hilfe der erfindungsgemäßen Konstruktion des Verstellelements ist eine unabhängige Positionierung einer befestigten Komponente in z-Richtung und in der xy-Ebene möglich. Die Einstellung der z-Position erfolgt durch Drehen der Hohlschraube, wodurch die Halterung der Komponente mit Hilfe des Außengewindes der Hohlschraube und/oder mit Hilfe der Gewindepaarung von Hohlschraube und Innenelement in z-Richtung gezielt positionierbar ist. Die z-Positionierung kann erfolgen, auch wenn die Komponente in ihrer xy -Position festgelegt ist. Die xy-Position wird über ein Befestigungsmittel und das Innenelement des Verstellelements fixiert. Gleichzeitig ermöglicht die vorliegende Konstruktion, dass bei nicht zu verändernder z-Positionierung die xy-Position der Komponente anpassbar ist. Zu diesem Zweck wird das Befestigungsmittel gelöst, welches das Innenelement fixiert. Nachfolgend ist die Hohlschraube in Bezug auf das Befestigungsmittel lateral verschiebbar, ohne dass die eingestellte z-Position verloren geht. Nachdem die neue xy-Position eingestellt worden ist, erfolgt erneutes Fixieren des Innenelements und somit auch der Hohlschraube mit Hilfe des Befestigungsmittels.

Gemäß einer Ausführungsform ist das Innenelement mit Hilfe einer Verrastung innerhalb der Hohlschraube befestigt. Eine derartige Verrastung gewährleistet eine spielfreie Befestigung der Hohlschraube am Innenelement, während die Hohlschraube gleichzeitig um ihre Längsachse drehbar ist. Dadurch ist ein Einstellen einer z-Position - also in Längsrichtung der Hohlschraube - gewährleistet, dass die Halterung der zu befestigenden Komponente bis zur gewünschten Position auf das Außengewinde der Hohlschraube aufgeschraubt wird.

Gemäß einer weiteren Ausführungsform des Verstellelements weist dessen Hohlschraube ein zum Außengewinde gegenläufiges oder gleichläufiges Innengewinde auf, während dessen Innenelement als Gewindebuchse ausgebildet ist und an seiner radialen Außenseite ein Gewinde umfasst, mit dem die Gewindebuchse innerhalb der Hohlschraube versetzbar ist.

Bei dieser bevorzugten Konstruktion sind Hohlschraube und Innenelement mit Hilfe eines Gewindes drehbar aneinander befestigt. Wird die z-Position der Halterung der Komponente durch Drehen der Hohlschraube eingestellt, ergibt sich der Verstellweg in z-Richtung aus einer Bewegung der Halterung auf dem Außengewinde der Hohlschraube und einem Versetzen der Hohlschraube auf dem Außengewinde des Innenelements. Auf diese Weise ist durch Anpassung der gegenläufigen oder gleichläufigen Gewinde an Innen- und Außenseite der Hohlschraube einstellbar, mit wie vielen Umdrehungen der Hohlschraube ein bestimmter Verstellweg in z-Richtung erzielbar ist.

In weiterer Ausgestaltung des erfindungsgemäßen Verstellelements weist dessen Hohlschraube ein Antriebselement und/oder einen nach innen ragenden Kragen auf, der eine Durchgangsöffnung der Hohlschraube derart verengt, dass sie geringer ist als ein Außendurchmesser der Scheibe.

Mit Hilfe oben beschriebener Konstruktionsalternativen wird die Scheibe zwischen Hohlschraube und Innenelement gehalten. Ist zudem die Scheibe verliersicher an dem Befestigungsmittel befestigt, lässt sich das Verstellelement als eine zusammenhängende Einheit aus Hohlschraube, Innenelement, Scheibe und Befestigungsmittel bereitstellen. Gemäß einer weiteren Ausgestaltung weist das Innenelement einen axialen Vorsprung auf, so dass die Scheibe zwischen Kragen der Hohlschraube und diesem Vorsprung gehalten wird.

Gemäß einer weiteren Alternative des Verstellelements ist der Außendurchmesser der Scheibe kleiner als ein Durchmesser der Durchgangsöffnung der Hohlschraube und/oder ein Durchmesser einer Durchgangsöffnung des Innenelements ist größer als ein Durchmesser des Befestigungsmittels, so dass über die Unterschiede in den Durchmesser ein maximaler lateraler Positionierweg des Verstellelements festlegbar ist.

Da das Befestigungsmittel, beispielsweise eine Befestigungsschraube, in seiner xy-Position fixiert ist, entscheidet der Unterschied zwischen dem Durchmesser des Befestigungsmittels und dem Innendurchmesser des Innenelements über die maximale laterale Positionierbarkeit bzw. Versetzbarkeit des Innenelements bzw. des Verstellelements um die Position des Befestigungsmittels herum. Es ist des Weiteren anwendbar, dass der maximale laterale Positionierweg des Verstellelements durch den Unterschied zwischen dem Durchmesser der Durchgangsöffnung der Hohlschraube und dem Außendurchmesser der Scheibe bestimmt wird. Sobald die Außenseite der Scheibe an der Innenwand der Hohlschraube beim Positionieren in der xy-Ebene änstößt, ist der maximale laterale Positionierweg des Verstellelements ausgeschöpft. Auf diese Weise lässt sich durch gezielte Dimensionierung des Durchmessers des Befestigungsmittels, des Innendurchmessers des Innenelements, des Außendurchmessers der Scheibe und des Innendurchmessers der Hohlschraube der maximale laterale Positionierweg des Verstellelements festlegen.

Als konstruktive Alternativen des Befestigungsmittels ist es bevorzugt, das Befestigungsmittel mit einem Kopf und einem Gewinde oder einem Drehverschluss oder einem Bajonettverschluss oder einem Schnappverschluss auszustatten.

### 4. Kurze Beschreibung der begleitenden Zeichnungen

Bevorzugte Ausführungsformen vorliegender Erfindung werden unter Bezugnahme auf die begleitende Zeichnung näher erläutert. Es zeigen:
- Fig. 1: eine seitliche teilweise Schnittansicht einer bevorzugten Ausführungsform des erfindungsgemäßen Verstellelements,
- Fig. 2: eine perspektivische Schnittansicht einer bevorzugten Ausführungsform des er- findungsgemäßen Verstellelements,
- Fig. 3 a bis d: einzelne Stationen des Zusammenbaus eines Teils des Verstellelements,
- Fig. 4a bis e: eine beispielhafte Einbau-, Fixier- und Verstellsequenz einer bevorzugten Aus- führungsform des erfindungsgemäßen Verstellelements und
- Fig. 5: eine weitere beispielhafte Darstellung des eingebauten Verstellelements.

### 5. Detaillierte Beschreibung bevorzugter Ausführungsform

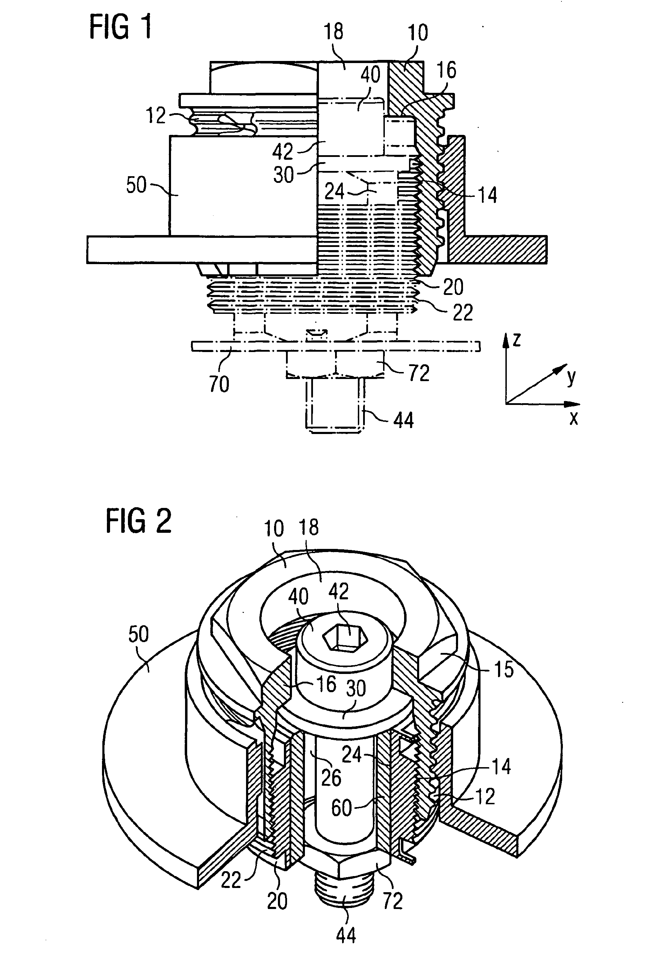

Fig. 1 zeigt eine bevorzugte Ausführungsform des erfindungsgemäßen Verstellelements 1 in einer seitlichen teilweisen Schnittansicht. Das Verstellelement 1 besteht aus einer Hohlschraube 10, einem Innenelement 20 und einer Scheibe 30. Es dient dem Fixieren und Positionieren im Raum - also in x-, y- und z-Richtung - einer beliebigen Komponente, wie beispielsweise eines Scheinwerfers im Fahrzeugbau. Der Scheinwerfer muss bei seinem Einbau an der Karosserie 70 des Fahrzeugs befestigt werden. Zudem muss der Scheinwerfer derart positioniert werden, dass die Anforderungen an die Spaltmaße zwischen Scheinwerfer und Karosserieteilen, gerade an der Außenseite des Fahrzeugs, erfüllt sind. Dies erfordert ein gezieltes Positionieren und Befestigen in allen drei Raumrichtungen.

Die zu befestigende und zu positionierende Komponente, die hier am Beispiel des Scheinwerfer erläutert wird, umfasst eine Halterung 50. Die Halterung 50 wird über ein Außengewinde 12 der Hohlschraube 10 am Verstellelement 1 befestigt und in z-Richtung verstellt. Ein Verstellen in z-Richtung erfolgt parallel zur Längsachse der Hohlschraube 10, wie in Fig. 1 durch die Richtungspfeile angedeutet ist. Durch Drehen der Hohlschraube 10 wird somit die Halterung 50 auf die Hohlschraube 10 zur gewünschten z-Position aufgeschraubt. Zu diesem Zweck ist das Außengewinde 12 als Standardgewinde, Feingewinde oder selbstschneidendes Gewinde ausgebildet. Gemäß einer weiteren bevorzugten Ausführungsform ist das Außengewinde 12 ein selbsthemmendes Gewinde, wie es beispielsweise in der EP 1 715 198 oder der EP 1 591 675 beschrieben ist.

Die Halterung 50 ist vorzugsweise als Aufnahmedom aus Kunststoff vorgesehen. Es sind natürlich auch andere Materialien für die Halterung 50 denkbar, wie beispielsweise Metalle, die die notwendigen Stabilitäts- und Gewichtserfordernisse erfüllen.

Das Verstellelement 1 wird über ein Befestigungsmittel 40 an einem-festen Punkt, beispielsweise der Karosserie 70 eines Fahrzeugs, befestigt. Zu diesem Zweck wirkt das Befestigungsmittel 40 mit einem entsprechenden Partner 72 zusammen. Das Befestigungsmittel 40 ist gemäß einer ersten Alternative eine Befestigungsschraube mit Schraubenkopf 42, Antriebsmerkmal, wie beispielsweise Schlitz, Sechskant oder Steckschlüsselaufnahme, und Gewinde 44. Die Befestigungsschraube 40 wird in eine Blindnietmutter oder eine Schweißmutter 72 eingeschraubt, die am Karosserieblech 70 befestigt ist. Gemäß einer weiteren Alternative des Befestigungsmittels 40 umfasst es an seinem dem Kopf 42 gegenüberliegenden axialen Ende einen Drehverschluss oder einen Bajonettverschluss oder einen Schnappverschluss. Diese wirken mit entsprechenden Formgestaltungen des Partners 72 zusammen, bspw. im Karosserieblech 70, so dass eine verlässliche Fixierung des Verstellelements 1 mit Hilfe des Befestigungsmittels 40 an der Karosserie 70 realisierbar ist.

Wird das Befestigungsmittel 40 beispielsweise am Karosserieblech 70 befestigt, wird das Verstellelement 1 über die Scheibe 30 und das Innenelement 20 am Karosserieblech 70 festgeklemmt. Da die Hohlschraube 10 drehbar am Innenelement 20 befestigt ist, wird auf diese Weise auch die auf der Hohlschraube 10 sitzende Halterung 50 in ihrer xy-Position fixiert.

Gemäß einer Ausführungsform des Verstellelements 1 ist die Hohlschraube 10 drehbar an der Auβenseite des Innenelements 20 befestigt. Bei Drehung der Hohlschraube 10 wird die Hohlschraube 10 in Bezug auf das Innenelement 20 nicht in axialer Richtung versetzt. Dies wird beispielsweise durch eine spielfreie Schnappverbindung zwischen Innenelement 20 und Hohlschraube 10 realisiert, so dass das Verstellelement 1 einfach herstellbar und verstellbar ist (nicht gezeigt).

Gemäß einer weiteren Alternative weist das Innenelement 20 an seiner radialen Außenseite ein Gewinde 22 auf, das passend zu einem Innengewinde 40 der Hohlschraube 10 ausgebildet ist. Das Innenelement 20 ist somit als Gewindebuchse realisiert. Das Außengewinde 12 und das Innengewinde 14 der Hohlschraube 10 sind gegenläufig ausgebildet. Dies hat den Vorteil, dass sich beim Drehen der Hohlschraube 10 und somit dem Positionieren der Halterung 50/der Komponente in z-Richtung ein kombinierter Verstellweg der Halterung 50/Komponente ergibt. Der kombinierte Verstellweg der Halterung 50 setzt sich zusammen aus dem Versatz in z-Richtung durch Drehen der Hohlschraube 10 auf dem Gewinde 22 des Innenelements 20 und durch das gleichzeitige Aufschrauben der Halterung 50 auf das Außengewinde 12 der Hohlschraube 10 während ihrer Drehung. In gleicher Weise ist es ebenfalls bevorzugt, das Außengewinde 12 und das Innengewinde 14 der Hohlschraube 10 gleichläufig auszubilden. Durch geeignete Dimensionierung der Steigung von Innen- 14 und Außengewinde 12 der Hohlschraube 10 lässt sich somit eine gewünschte Umdrehungszahl der Hohlschraube 10 zur z-Positionierung der Halterung 50 festlegen. Dies erleichtert die Installation des Verstellelements und der damit zu positionierenden Komponente und reduziert einen möglichen Wartungsaufwand. Die oben erläuterten Merkmale des Verstellelements 1 sind ebenfalls in Fig. 2 zu erkennen. Gemäß einer weiteren Ausgestaltung weist das Innenelement 20 eine Hülse 60 auf. Die Hülse 60 besteht vorzugsweise aus Metall oder einem anderen stabilisierenden Material zur Reduzierung der Flächenpressung einer Kunststoffvariante des Innenelements 20. Es sind daher Werkstoffe mit entsprechend hohen Festigkeitswerten, d.h. Zug- und Druckfestigkeit, bevorzugt. Diese gewährleisten eine Normverschraubung mit höheren Anzugsmomenten, also eine verlässliche Befestigung des Innenelements 20 ohne Verformung desselbigen. Die in das Innenelement 20 eingebrachte Hülse 60 wirkt somit als Versteifung oder Compression-Limiter, da es eine Relaxation des Innenelements 20 minimiert, vorzugsweise verhindert. Bei einer Kunststoffvariante des Innenelements 20 besteht nämlich die Möglichkeit, dass es aufgrund der mechanischen Belastung durch die Hohlschraube 10 nachgibt bzw. fließt, so dass sowohl die Positionierung als auch die Befestigung durch das Verstellelement 1 gestört werden. In weiterer Ausgestaltung vorliegender Erfindung ist es ebenfalls bevorzugt, das Innenelement 20 vollständig aus Metall herzustellen, so dass das Innenelement 20 aufgrund seines Materials keine zusätzliche stabilisierende Hülse 60 erfordert.

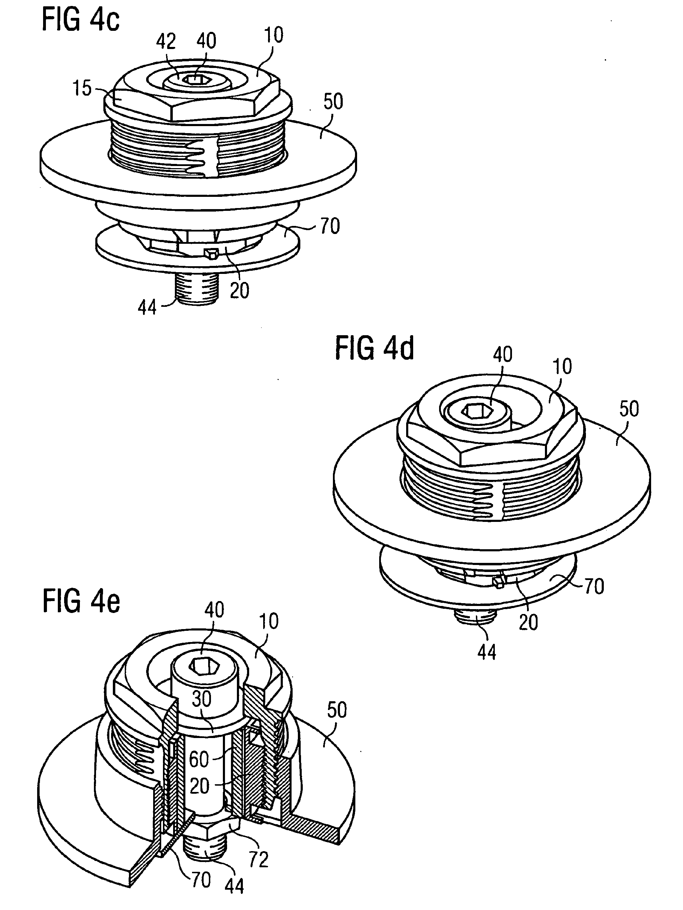

Wie man in Fig. 2 erkennen kann, ist gemäß einer weiteren Ausgestaltung des Verstellelements 1 ein Durchmesser einer Durchgangsöffnung 26 des Innenelements 20 mit oder ohne Hülse 60 größer ausgebildet als ein Durchmesser des Befestigungsmittels 40. Wenn die Befestigungsschraube 40 bereits teilweise in die Schweißmutter 72 eingeschraubt ist, wodurch das Verstellelement 1 aber noch nicht in seiner xy-Position (vgl. Fig. 1) fixiert ist, lässt sich das Verstellelement 1 noch lateral bezogen auf die Längsachse des Befestigungsmittels 40 versetzen. Der seitliche bzw. laterale Versatz oder der maximale laterale Positionierweg des Verstellelements 1 in der xy-Ebene (vgl. Fig. 1) wird durch die Differenz zwischen dem Durchmesser der Durchgangsöffnung 26 des Innenelements 20 oder der Hülse 60 und dem Durchmesser des Befestigungsmittels 40 festgelegt. Nutzt man diesen lateralen Positionierweg aus, ist der Kopf 42 des Befestigungsmittels 40 nach dem Fixieren des Verstellelements 1 in der gewünschten xy-Position beispielweise außermittig bezogen auf die Hohlschraube 10 angeordnet. Dies ist in Fig. 4d dargestellt.

Alternativ oder in Kombination ist der laterale Positionierweg in der xy-Ebene durch die Differenz zwischen einem Durchmesser der Durchgangsöffnung 18 der Hohlschraube 10 und einem Außendurchmesser der Scheibe 30 bestimmt, also dem Abstand zwischen Innenwand 19 der Hohlschraube 10 und Außenrand der Scheibe 30. Die Scheibe 30 dient dem Fixieren des Innenelements 20 am Karosserieblech 70 mit Hilfe des Befestigungsmittels 40. Dabei drückt die Scheibe 30 zumindest auf einen Teil der ihr zugewandten axialen Stirnseite des Innenelements 20 und klemmt dadurch das Innenelement 20 zwischen Scheibe 30 und Karosserieblech 70 fest. Die Scheibe 30 ist auf dem Befestigungsmittel 40 angeordnet, vorzugsweise verliersicher daran befestigt. Das Innenelement 20 und somit das Verstellelement 1 wird vor dem Fixieren in der xy-Ebene um das Befestigungsmittel 40 herum versetzt bzw. positioniert. Der maximale laterale Positionierweg ist erreicht, sobald der äußere radiale Rand der Scheibe 30 an der Innenwand der Hohlschraube 10 anstößt. Basierend auf den oben beschriebenen Konstruktionen wird bevorzugt ein maximaler lateraler Positionierweg von ± 2,5 mm in Kombination mit einem maximalen Verstellweg von ca. 8 mm in z-Richtung mit Hilfe des Verstellelements 1 realisiert. Diese Positionierwege sind in weiterer Ausgestaltung der Erfindung in ihrer Größe an Anwendungen anpassbar.

Gemäß einer weiteren Ausführungsgestaltung des Verstellelements 1 umfasst die Hohlschraube 10 einen radial nach innen in ihre Durchgangsöffnung 18 ragenden Kragen 16. Der Kragen 16 verengt die Durchgangsöffnung 18 der Hohlschraube 10 derart, dass die Scheibe 30 zwischen Kragen 16 und Innenelement 20 verliersicher gehalten wird. Ist die Scheibe 30 zudem verliersicher mit dem Befestigungsmittel 40 verbunden, kann das Verstellelement 1 als zusammenhängende Komponente vormontiert bereitgestellt werden. Dies reduziert den Installationsaufwand des Verstellelements 1, da kein Zusammenbau aus Einzelkomponenten des Verstellelements 1 während der Fertigung beispielsweise eines Fahrzeugs erforderlich ist.

Optional umfasst das Innenelement 20 einen axialen Vorsprung 24 an einer oder beiden axialen Stirnseiten. Dadurch wird die Scheibe 30 zwischen Kragen 16 und Vorsprung 24 gehalten. Über den zweiten optionalen Kragen stützt sich das Innenelement 20 auf dem Karosserieblech 70 ab.

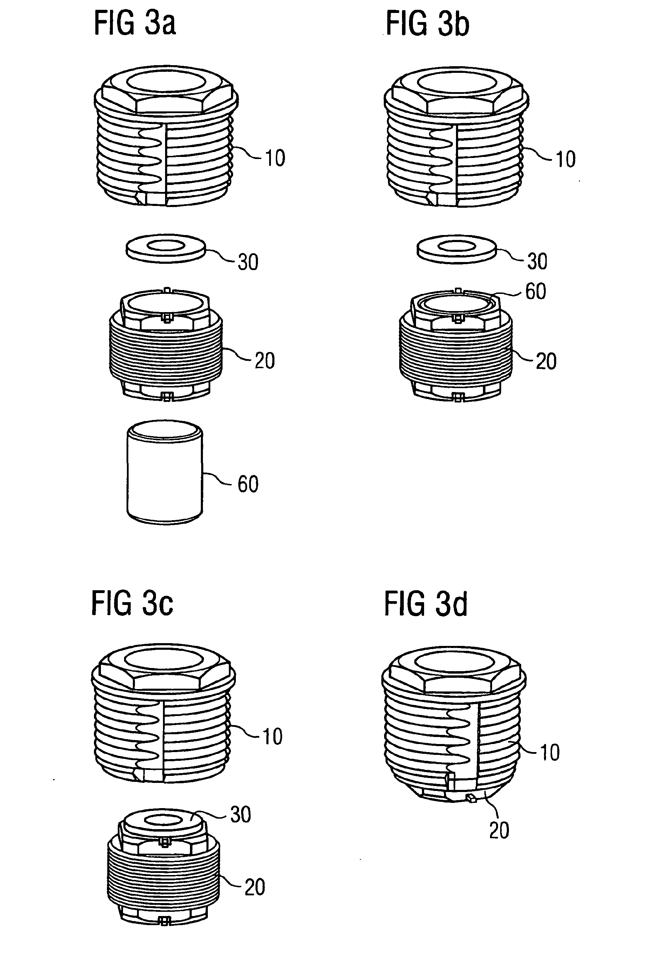

Anhand der Figuren 3a bis 3d wird der Zusammenbau des Verstellelements 1 beispielgebend erläutert. Die Einzelkomponenten des Verstellelements sind in Fig. 3a in Form einer Explosionsdarstellung gezeigt. Sie umfassen die Hohlschraube 10, die Scheibe 30, die Gewindebuchse 20 und die Hülse 60. Zunächst wird gemäß Fig. 3b die Hülse 60 in die Gewindebuchse 20 eingebracht, vorzugsweise eingepresst, eingelegt oder umspritzt. Nachfolgend wird die Scheibe 30 auf die Gewindebuchse 20 mit eingepresster Hülse 60 aufgesetzt (vgl. Fig. 3c). Falls die Scheibe 30 verliersicher auf dem Befestigungsmittel 40 angeordnet ist, würde das Befestigungsmittel 40 innerhalb der Gewindebuchse 20 in Fig. 3c angeordnet werden. Nachfolgend wird die Gewindebuchse 20 mit Scheibe 30 und eventuell mit Befestigungsmittel 40 in die Hohlschraube 10 eingeschraubt, wie es Fig. 3d zeigt.

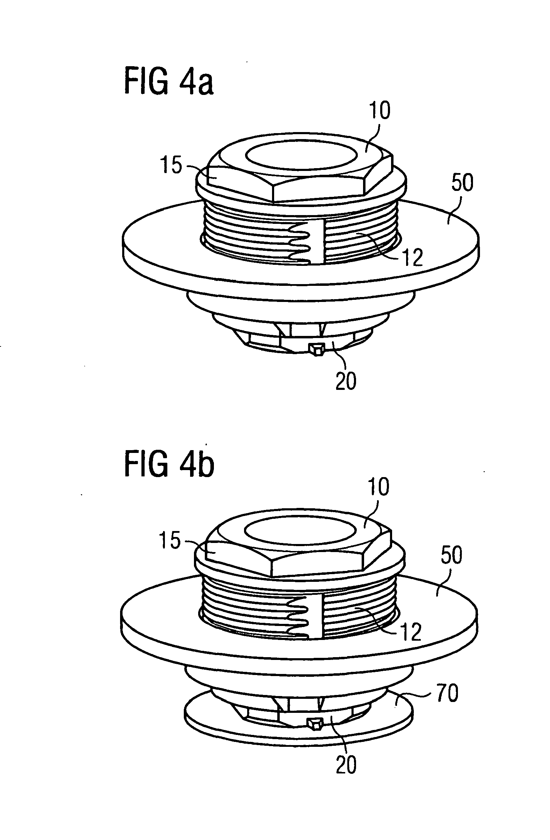

Es ist bevorzugt, das Verstellelement 1 vormontiert in der Halterung 50, beispielsweise eines Scheinwerfers, an einen Fahrzeughersteller zu liefern. Diese Situation ist exemplarisch in Fig. 4a dargestellt. Zur Installation des Scheinwerfers wird das Innenelement 20 zunächst an der Stelle auf das Karosserieblech 70 aufgesetzt, wo es ein Befestigungsmöglichkeit des Befestigungsmittels 40 gibt (vlg. Fig. 4b). Danach wird durch Einsetzen des Befestigungsmittels 40 eine Vorfixierung des Verstellelements 1 und der daran befestigten Komponente vorgenommen (vgl. Fig. 4c). Nach dem Einstellen der gewünschten Position der Komponente in der xy-Ebene wird das Verstellelement 1_{.} mit Hilfe des Befestigungsmittels 40 am Karosserieblech 70 fixiert. Dies führt beispielsweise zu einer außermittigen Position des Befestigungsmittels 40 im Vergleich zur Durchgangsöffnung 18 der Hohlschraube 10 (vgl. Fig. 4d). Diese Fixierung in der xy-Position ist zur ergänzenden Illustration auch in Fig. 4e als perspektivische Schnittansicht gezeigt.

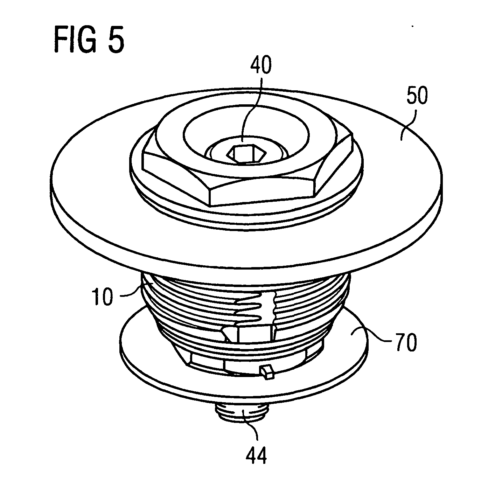

Nach dem Fixieren in der gewünschten xy-Position wird über ein Drehen der Hohlschraube 10 die z-Position der Halterung 50 und somit des Scheinwerfers eingestellt. Es ergibt sich beispielgebend die Anordnung, die in Fig. 5 dargestellt ist.

Je nach gewünschter Vorgehensweise ist es möglich, zunächst eine Fixierung des Verstellelements 1 an der gewünschten xy-Position vorzunehmen und nachfolgend die z-Position einzustellen. Es ist des Weiteren denkbar, zunächst die xy-Position einzustellen, ohne jedoch das Verstellelement 1 mit Hilfe des Befestigungsmittels 40 am Karosserieblech 70 zu fixieren. Nachfolgend wird die z-Position eingestellt. Abschließend erfolgt dann ein Befestigen des Verstellelements 1 mit Hilfe des Befestigungsmittels 40. Das erfindungsgemäße Verstellelement 1 ermöglicht ebenfalls ein Nachstellen der xy-Position, ohne die Einstellungen der z-Position ändern zu müssen. Es ist des Weiteren möglich, die z-Position zu verstellen, ohne dass die xy-Position verändert oder gelockert werden muss. Auf dieser konstruktiven Grundlage ist ein optimaler Toleranzausgleich und zudem eine räumliche Anordnung einer Komponente mit Hilfe des Verstellelements 1 in Kombination mit einer verlässlichen Befestigung möglich.

### Bezugszeichenliste

- 1: Verstellelement
- 10: Hohlschraube
- 12: Außengewinde der Hohlschraube
- 14: Innengewinde der Hohlschraube
- 15: Antriebsmittel der Hohlschraube
- 16: Kragen der Hohlschraube
- 18: Durchgangsöffnung der Hohlschraube
- 19: Innenwand der Hohlschraube
- 20: Innenelement, Gewindebuchse
- 22: Gewinde der Gewindebuchse
- 24: Durchgangsöffnung des Innenelements, Kontaktfläche des Innenelement 20 zur Hülse 60
- 30: Scheibe
- 40: Befestigungsmittel
- 42: Kopf
- 44: Gewinde
- 50: Halterung
- 60: Hülse
- 61: Durchgangsöffnung der Hülse
- 70: Karosserie
- 72: Partner des Befestigungsmittels, bspw. Schweißmutter, Blindnietmutter, Klippmutter

## Patentansprüche

1. Ein Verstellelement (1), mit dem eine Komponente befestigbar und im Raum positionierbar ist, das die folgenden Merkmale aufweist:
a. eine Hohlschraube (10) mit einem Außengewinde (12), mit dem eine Halterung (50) der Komponente in axialer Richtung der Hohlschraube (10) positionierbar ist,
b. ein Innenelement (20), das innerhalb der Hohlschraube (10) axial versetzbar angeordnet und an dem die Hohlschraube (10) über ein Innengewinde (14) drehbar befestigt ist, und
c. eine Scheibe (30), die in axialer Richtung des Innenelements (20) zwischen Hohlschraube (10) und Innenelement (20) lateral verschiebbar gehalten wird, so dass das Verstellelement (1) lateral positionierbar und mit einem die Scheibe (30) durchgreifenden Befestigungsmittel (40) fixierbar ist.

2. Verstellelement (1) gemäß Anspruch 1, dessen Innenelement (20) mittels einer Verrastung innerhalb der Hohlschraube (10) befestigt ist.

3. Verstellelement (1) gemäß Anspruch 1, dessen Hohlschraube (10) das zum Außengewinde (12) gegenläufige oder gleichläufige Innengewinde (14) aufweist und dessen Innenelement (20) als Gewindebuchse ausgebildet ist und an seiner radialen Außenseite ein Gewinde (22) umfasst, mit dem die Gewindebuchse (20) innerhalb der Hohlschraube (10) versetzbar ist.

4. Verstellelement (1) gemäß einem der vorhergehenden Ansprüche, dessen Hohlschraube (10) ein Antriebselement und einen radial nach innen ragenden Kragen-(16) aufweist, der eine Durchgangsöffnung (18) der Hohlschraube (10) derart verengt, dass sie geringer ist als ein Außendurchmesser der Scheibe (30).

5. Verstellelement (1) gemäß Anspruch 4, dessen Innenelement (20) einen axialen Vorsprung (24) aufweist, so dass die Scheibe (30) zwischen Kragen (16) und Vorsprung (24) gehalten wird.

6. Verstellelement (1) gemäß einem der vorhergehenden Ansprüche, dessen Innenelement (20) eine Hülse (60) aufweist.

7. Verstellelement (1) gemäß Anspruch 1, bei dem der Außendurchmesser der Scheibe (30) kleiner ist als ein Durchmesser der Durchgangsöffnung (18) der Hohlschraube (10) und/oder ein Durchmesser einer Durchgangsöffnung (26) des Innenelements (20) größer ist als ein Durchmesser des Befestigungsmittels (40), so dass über die Unterschiede in den Durchmessern ein maximaler lateraler Positionierweg des Verstellelements festlegbar.

8. Verstellelement (1) gemäß einem der vorhergehenden Ansprüche, dessen Befestigungsmittel (40) einen Kopf (42) und ein Gewinde (44) oder einen Drehverschluss oder einen Bajonettverschluss oder einen Schnappverschluss aufweist.

## Claims

1. An adjustment element (1), with which a component can be fastened and can be positioned in space, which has the following features:
a. a hollow bolt (10) having an outer thread (12), with which a holder (50) of the component can be positioned in the axial direction of the hollow bolt (10),
b. an inner element (20), which is disposed axially displaceable within the hollow bolt (10), and to which the hollow bolt (10) is fixed in a rotatable manner using an inner thread (14), and
c. a washer (30), which is held laterally displaceable in the axial direction of the inner element (20) between the hollow bolt (10) and the inner element (20), such that the adjustment element (1) can be positioned laterally and can be fixed with a fastening means (40) grasping through the washer (30).

2. The adjustment element (1) according to Claim 1, whose inner element (20) is fastened within the hollow bolt (10) by means of a latching.

3. The adjustment element (1) according to Claim 1, whose hollow bolt (10) has inner threads (14) running counter to, or in the same direction as, the outer thread (12), and whose inner element (20) is designed as a threaded bushing and comprises a thread (22) at its radial outside, with which the threaded bushing (20) can be offset within the hollow bolt (10).

4. The adjustment element (1) according to one of the preceding claims, whose hollow bolt (10) has a drive element and a collar (16) projecting radially inward, which narrows a through opening (18) of the hollow bolt (10) such that it is smaller than an outer diameter of the washer (30).

5. The adjustment element (1) according to Claim 4, whose inner element (20) has an axial projection (24) so that the washer (30) is held between the collar (16) and the projection (24).

6. The adjustment element (1) according to one of the preceding claims, whose inner element (20) has a sleeve (60).

7. The adjustment element (1) according to Claim 1, in which the outer diameter of the washer (30) is smaller than a diameter of the through opening (18) of the hollow bolt (10) and/or a diameter of a through opening (26) of the inner element (20) is larger than a diameter of the fastening means (40), so that a maximum lateral positioning travel of the adjustment element can be determined by the difference in the diameters.

8. The adjustment element (1) according to one of the preceding claims, whose fastening means (40) has a head (42) and a thread (44) or a rotation lock or a bayonet lock or a snap lock.

## Revendications

1. Élément de positionnement (1), avec lequel un composant peut être fixé et positionné dans l'espace, présentant les caractéristiques suivantes :
a. un boulon creux (10) avec un filetage extérieur (12), avec lequel un support (50) du composant peut être positionné dans la direction axiale du boulon creux (10),
b. un élément intérieur (20), qui est agencé mobile axialement à l'intérieur du boulon creux (10) et sur lequel le boulon creux (10) est fixé de manière rotative par le biais d'un filetage intérieur (14), et
c. une rondelle (30), qui, dans la direction axiale de l'élément intérieur (20), est maintenue mobile latéralement entre le boulon creux (10) et l'élément intérieur (20), de sorte que l'élément de positionnement (1) peut être positionné latéralement et fixé avec un moyen de fixation (40) passant à travers la rondelle (30).

2. Élément de positionnement (1) selon la revendication 1, dont l'élément intérieur (20) est fixé à l'intérieur du boulon creux (10) au moyen d'un enclenchement.

3. Élément de positionnement (1) selon la revendication 1, dont le boulon creux (10) présente le filetage intérieur (14) allant dans le sens opposé ou dans le même sens que le filetage extérieur (12) et dont l'élément intérieur (20) est constitué en tant que douille filetée et comprend sur son côté extérieur radial un filetage (22), avec lequel la douille filetée (20) est mobile à l'intérieur du boulon creux (10).

4. Élément de positionnement (1) selon l'une des revendications précédentes, dont le boulon creux (10) présente un élément d'entraînement et un rebord (16) dépassant radialement vers l'intérieur, qui rétrécit une ouverture de passage (18) du boulon creux (10) de telle sorte qu'elle est plus petite qu'un diamètre extérieur de la rondelle (30).

5. Élément de positionnement (1) selon la revendication 4, dont l'élément intérieur (20) présente une saillie (24) axiale, de sorte que la rondelle (30) est maintenue entre le rebord (16) et la saillie (24).

6. Élément de positionnement (1) selon l'une des revendications précédentes, dont l'élément intérieur (20) présente un manchon (60).

7. Élément de positionnement (1) selon la revendication 1, dans lequel le diamètre extérieur de la rondelle (30) est inférieur à un diamètre de l'ouverture de passage (18) du boulon creux (10) et/ou un diamètre d'une ouverture de passage (26) de l'élément intérieur (20) est supérieur à un diamètre du moyen de fixation (40), de sorte qu'un trajet de positionnement latéral maximal de l'élément de positionnement peut être déterminé par le biais des différences dans les diamètres.

8. Élément de positionnement (1) selon l'une des revendications précédentes, dont le moyen de fixation (40) présente une tête (42) et un filetage (44) ou une fermeture à vis ou une fermeture à baïonnette ou une fermeture à déclic.
